# EUROPEAN PATENT APPLICATION

(11) **EP 1 638 345 A1**
(43) Date of publication of application: **22.03.2006**
(21) Application number: 04746388.0
(22) Date of filing: 18.06.2004
(51) Int. Cl.: H04N 17/04, H04N 5/74

(54) **METHOD FOR CALCULATING DISPLAY CHARACTERISTIC CORRECTION DATA, PROGRAM FOR CALCULATING DISPLAY CHARACTERISTIC CORRECTION DATA, AND DEVICE FOR CALCULATING DISPLAY CHARACTERISTIC CORRECTION DATA**

(30) Priority: 25.06.2003 JP 2003181793
(71) Applicant: Olympus Corporation, Tokyo 151-0072 (JP)
(72) Inventor: YAMAGUCHI, Kazuo c/o Olympus Corporation, Shibuya-ku, Tokyo 151-0072 (JP); KUMANO, Takafumi, / (JP); TOYAMA, Takahiro, / (JP); WAKI, Mitsuji, / (JP)
(74) Representative: von Hellfeld, Axel
(86) International application number: PCT/JP2004/008919
(87) International publication number: WO 2005/002240

(57) **Abstract**

A method of calculating correction data for correcting display characteristic includes generating test pattern data (S1), displaying, based on the test pattern data, a test pattern on an image display device (S2), obtaining capture data by capturing the test pattern (S3), and calculating, based on the capture data, correction data for correcting display characteristic of the image display device. In this case, when the capture data does not normally constitute an entire image, correction data relating to an entire image relating to the test pattern data is calculated by setting the not-normally-constituting area as the area to be complemented (S6 and S7) and complementing the area to be complemented based on the area excluding the area to be complemented (S9 and S14).

## Description

### Technical Field

The present invention relates to a method of calculating correction data for correcting display characteristic, program for calculating correction data for display characteristic and apparatus for calculating correction data for correcting display characteristic for calculating correction data for a display characteristic of an image display device based on capture data of a test pattern.

### Background Art

While some image display device may include one video device only, some other image display may be known as including a combination of multiple video devices. In a more specific example, a projection system is known in which multiple projectors are used so that a partial image can be projected from each of the projectors and one large image can be thus constructed on one screen.

Each of the video devices of this kind of image display device may cause a distortion of an image, a displacement of an image, non-uniform of color, non-uniform of luminance, a shift of white balance and/or non-optimum characteristic of a gamma characteristic, and a combination of the video devices may cause a geometric displacement, a color shift, a luminance shift and/or a difference between gamma characteristics. The unevenness in a display characteristic such as a geometric characteristic, a color characteristic, a luminance characteristic, a white balance characteristic, a gamma characteristic or the like may be visually recognized, which may deteriorate the quality of the entire image.

In order to address this issue, a system has been conventionally proposed that achieves a high quality picture by displaying a test pattern on an image display device, capturing the image by a capturing device such as a digital camera, creating correction data for correcting the display characteristic based on the capture image and correcting the display characteristic of the image display device based on the correction data.

The technology is disclosed in Japanese Unexamined Patent Application Publication No. 9-326981 in which, for example, a geometric correction is implemented by disposing a camera in front of a screen, displaying a test pattern on the screen, capturing the displayed test pattern, calculating correction data based on the capture image, and correcting and displaying an input image based on the correction data.

WO 99/31877 discloses a technology including a multi-projection apparatus for constructing one image on a screen by using multiple projectors each of which projects a partial image, the apparatus further including a screen status monitoring camera for correcting a geometric deformation and/or color locally varied on the partial image based on image information input from the camera.

Both of these technologies assume that an entire image displayed on an image display device is captured by a capturing device, that is, image-captured data relating to the entire area of the image is obtained before the correction data is calculated.

However, the entire display area of the image display device may not be captured in actual use. For example, when an image display device is provided on a stage, for example, a microphone, a stage setting and so on may be positioned between the image display device and a capturing device provided for performing display correction on the image display device. Alternatively, because of the limited space, a capturing device may not be disposed in a distance that allows the entire display area of the image display device can fit within the screen of the capturing device.

Furthermore, at least a part of capture image data may not hold a proper display characteristic though the entire image display area can be captured. For example, some projection type image display device having a frame within the plane of the screen may not capture accurate display characteristic due to an influence from a small shadow occurring near the frame.

The present invention is made in view of this circumstance, and it is an object of the invention to provide a method of calculating a correction data for correcting display characteristic, program for calculating correction data for correcting display characteristic and apparatus for calculating correction data for correcting display characteristic, which can display a high quality image because correction data for correcting display characteristic relating to the entire image can be calculated even when capture data resulting from capturing of a test data does not normally constitute the entire image relating to the test pattern data.

### Disclosure of Invention

A method of calculating correction data for correcting display characteristic according to a first invention is a method including the steps of displaying a test pattern on an image display device based on test pattern data, obtaining capture data by capturing the test pattern, and calculating correction data for correcting a display characteristic of the image display device based on the obtained capture data, wherein, when the obtained capture data does not normally constitute an entire image relating to the test pattern data, correction data relating to an entire image relating to the test pattern data including correction data of an area to be complemented is calculated by setting the area to be complemented so as to include the not-normally-constituting area and complementing the area to be complemented based on the area excluding the area to be complemented.

A method of calculating correction data for correcting display characteristic according to a second invention is the method of calculating correction data for correcting display characteristic according to the first invention, wherein the test pattern data is generated before the test pattern is displayed on the image display device.

A method of calculating correction data for correcting display characteristic according to a third invention is the method of calculating correction data for correcting display characteristic according to the first or second invention, wherein the display characteristic includes at least one of a geometric characteristic, a color characteristic, a luminance characteristic, a white balance characteristic and a gamma characteristic.

A method of calculating correction data for correcting display characteristic according to a fourth invention is the method of calculating correction data for correcting display characteristic according to the first to third inventions, wherein the calculation of correction data of the area to be complemented is performed by obtaining capture data relating to the entire image relating to the test pattern data by complementing capture data of the area to be complemented based on capture data of the area excluding the area to be complemented, and calculating correction data relating to the entire image relating to the test pattern data based on the obtained capture data.

A method of calculating correction data for correcting display characteristic according to a fifth invention is the method of calculating correction data for correcting display characteristic according to the first to third inventions, wherein the calculation of correction data of the area to be complemented is performed by calculating correction data of the area excluding the area to be complemented based on the capture data of the area excluding the area to be complemented, and complementing correction data of the area to be complemented based on the calculated correction data of the area excluding the area to be complemented.

A method of calculating correction data for correcting display characteristic according to a sixth invention is the method of calculating correction data for correcting display characteristic according to the first to third inventions, wherein the calculation of correction data of the area to be complemented is performed by calculating correction data of the entire area of the image relating to the capture data based on the capture data, and complementing correction data of the area to be complemented based on the correction data of the area excluding the area to be complemented in the calculated correction data.

A method of calculating correction data for correcting display characteristic according to a seventh invention is the method of calculating correction data for correcting display characteristic according to the first to sixth inventions, wherein an image relating to the capture data is displayed before the area to be complemented is set, and the area to be complemented is set in accordance with a manual operation with respect to the displayed image.

A method of calculating correction data for correcting display characteristic according to an eighth invention is the method of calculating correction data for correcting display characteristic according to the first to sixth inventions, wherein, based on a result of recognition of an area that does not normally constitute the image relating to the test pattern data, the recognition being made by analyzing the capture data, the area to be complemented is automatically set so as to include the recognized area.

A method of calculating correction data for correcting display characteristic according to a ninth invention is the method of calculating correction data for correcting display characteristic according to the eighth invention, wherein the analysis of capture data is performed by comparing multiple capture data corresponding to multiple test pattern data.

A method of calculating correction data for correcting display characteristic according to a tenth invention is the method of calculating correction data for correcting display characteristic according to the sixth invention, wherein, the area to be complemented is automatically set so as to constitute the area based on a result of recognition of an area that does not normally constitute the image relating to the test pattern data, the recognition being made by analyzing correction data of the entire area of the image relating to the capture data.

A method of calculating correction data for correcting display characteristic according to an eleventh invention is the method of calculating correction data for correcting display characteristic according to the tenth invention, wherein the analysis of capture data is performed by comparing correction data of the entire area of the images relating to multiple capture data corresponding to multiple test pattern data.

A method of calculating correction data for correcting display characteristic according to a twelfth invention is the method of calculating correction data for correcting display characteristic according to the first to sixth inventions, wherein an obstacle is detected by using an obstacle detecting device before the area to be complemented is set, and, the area to be complemented is automatically set so as to constitute the area based on a result of recognition of an image area corresponding to the detected obstacle as an area that does not normally constitute the image relating to the test pattern data.

A method of calculating correction data for correcting display characteristic according to a thirteenth invention is the method of calculating correction data for correcting display characteristic according to the first invention, wherein data of the area to be complemented is complemented by copying data of the area excluding the area to be complemented.

A method of calculating correction data for correcting display characteristic according to a fourteenth invention is the method of calculating correction data for correcting display characteristic according to the first invention, wherein the complementing of the data of the area to be complemented is calculated from the data of the area excluding the area to be complemented based on a predetermined correlation.

A method of calculating correction data for correcting display characteristic according to a fifteenth invention is the method of calculating correction data for correcting display characteristic according to the fourteenth invention, wherein the predetermined correlation is a distance between the position of a part to be complemented in the area to be complemented and the position at which complementing data exists in the area excluding the area to be complemented.

A method of calculating correction data for correcting display characteristic according to a sixteenth invention is the method of calculating correction data for correcting display characteristic according to the first invention, wherein the image display device is a projection device including a projector for projecting an image and a screen for displaying the image projected by the projector.

A method of calculating correction data for correcting display characteristic according to a seventeenth invention is the method of calculating correction data for correcting display characteristic according to the first invention, wherein the image display device is a multi-projection device having multiple projectors each for projecting a partial image and a screen for displaying images projected by the multiple projectors and constructing one image as a whole by arranging partial images projected by the projectors on the screen in such a manner that the images are superimposed one over another at the edges of adjacent partial images.

A program for calculating correction data for correcting display characteristic according to an eighteenth invention is a program causing a computer to display a test pattern on an image display device based on test pattern data, obtain capture data by capturing the test pattern, and calculate correction data for correcting a display characteristic of the image display device based on the obtained capture data, wherein, when the obtained capture data does not normally constitute an entire image relating to the test pattern data, correction data relating to an entire image relating to the test pattern data including correction data of an area to be complemented is calculated by setting the area to be complemented so as to include the not-normally-constituting area and complementing the area to be complemented based on the area excluding the area to be complemented.

An apparatus for calculating correction data for correcting display characteristic according to a nineteenth invention is an apparatus including a capturing device for capturing a test pattern displayed on an image display device based on test pattern data and obtaining capture data, and a calculating device for calculating correction data for correcting a display characteristic of the image display device based on the obtained capture data, wherein, when the obtained capture data does not normally constitute an entire image relating to the test pattern data, correction data relating to an entire image relating to the test pattern data including correction data of an area to be complemented is calculated by setting the area to be complemented so as to constitute the not-normally-constituting area and complementing the area to be complemented based on the area excluding the area to be complemented.

### Brief Description of the Drawings

Fig. 1 is a diagram schematically showing a configuration for correcting a display characteristic of a multi-projection system according to an embodiment of the invention;
Fig. 2 is a block diagram showing a functional configuration of a display characteristic correction system for the multi-projection system according to the embodiment;
Fig. 3 is a flowchart schematically illustrating an operation of the display characteristic correction system for the multi-projection system according to the embodiment;
Fig. 4 is a diagram showing an example in which an obstacle is positioned within a capturing area according to the embodiment;
Fig. 5 is a diagram showing capture data resulting from capturing of a test pattern having a high luminosity when an obstacle exists therein according to the embodiment;
Fig. 6 is a diagram showing capture data resulting from capturing of a test pattern having a low luminosity when an obstacle exists therein according to the embodiment;
Fig. 7 is a diagram showing how an area to be complemented in capture data is set with a margin according to the embodiment;
Fig. 8 is a diagram showing an example of a status of an area to be complemented in capture data according to the embodiment;
Fig. 9 is a diagram showing how capture data of the area to be complemented is complemented by using capture data of the area excluding the area to be complemented according to the embodiment;
Fig. 10 is a diagram showing an example of a status of an area to be complemented in correction data for correcting display characteristic according to the embodiment;
Fig. 11 is a diagram showing how correction data for correcting display characteristic of the area to be complemented is complemented by using correction data for correcting display characteristic of the area excluding the area to be complemented according to the embodiment;
Fig. 12 is a diagram for explaining a complementing method with weighting according to the embodiment;
Fig. 13 is a diagram showing a status in which capture data of a test pattern for correction of a geometric characteristic includes an obstacle according to the embodiment;
Fig. 14 is a diagram showing how a marker in a test pattern is complemented according to the embodiment;
Fig. 15 is a diagram showing how a marker in a test pattern having a geometric distortion is complemented according to the embodiment;
Fig. 16 is a diagram showing capture data of a test pattern for correcting the color characteristic according to the embodiment;
Fig. 17 is a diagram showing a status in which the capture data of the test pattern for correction of the color characteristic includes an obstacle according to the embodiment;
Fig. 18 is a diagram showing how the capture data of the test pattern is divided into small blocks according to the embodiment;
Fig. 19 is a diagram showing a status in which capture data divided into small blocks includes an obstacle according to the embodiment;
Fig. 20 is a diagram showing a status in which a capturing area by a capturing device is narrower than a display area on an image display device according to the embodiment; and
Fig. 21 is a diagram showing a status in which a structural frame exists within the display screen of the image display device.

### Best Mode for Carrying Out the Invention

An embodiment of the invention will be described below with reference to drawings.

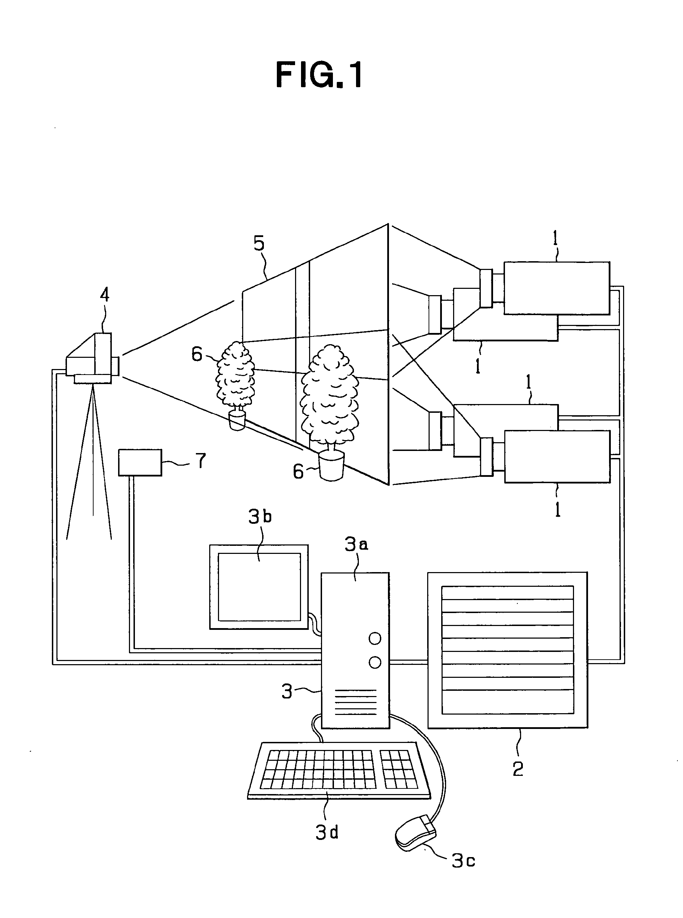

Figs. 1 to 21 show an embodiment of the invention, and Fig. 1 is a diagram schematically showing a configuration for correcting a display characteristic of a multi-projection system.

A multi-projection system serving as an image display device includes multiple projectors 1, an image processor 2, and a screen 5. The multiple projectors 1 may include multiple LCD projectors or multiple DLP projectors. The image processor 2 creates and outputs a partial image to be projected by each of the projectors 1 based on still image data and moving image data supplied from a recording medium or a communication circuit, for example. Partial images from the projectors 1 are projected onto the screen 5. One image is constructed as a whole by displaying and arranging adjacent partial images projected on the screen 5 by the projectors 1 in such a manner that the images are superimposed one over another at the edges.

The multi-projection system may not have a uniformity of display characteristic in relativity as described above in each of the projectors 1 or among the projectors 1.

Accordingly, such a display characteristic must be corrected when the multi-projection system is manufactured or set up or when maintenance is performed thereon after the set-up. A device for calculating correction data for correcting display characteristic in the display characteristic correction system therefore includes a digital camera 4 serving as a capturing device, an obstacle sensor 7 serving as an obstacle detecting device and a computer 3 serving as a computing device.

The digital camera 4 is for creating electronic capture image data by capturing an image displayed on a display area of the screen 5.

Notably, the digital camera 4 is adopted as a capturing device, but the invention is not limited thereto. Capture image data can be created directly from a film resulting from capturing with a silver-halide film camera and developing or can be created by using a scanner, for example, to scan a print created from a film. Furthermore, the capturing device may be a system that uses a line sensor, for example, to directly scan the display area of the screen 5.

Here, an obstacle 6 exists between the digital camera 4 and the screen 5, for example. The obstacle 6 in this case refers to a factor that exists between the digital camera 4 serving as the capturing device and the screen 5 serving as the display area of the image display device and causes at least a part of information on a test pattern to be omitted from the capture image of the test pattern displayed on the screen 5 which is captured by the digital camera 4. The obstacle sensor 7 is used as one device for detecting the obstacle 6. The obstacle sensor 7 may use various elements such as the ones using ultrasonic waves or laser light beams.

While Fig. 1 shows an example in which the obstacle sensor 7 is provided, the obstacle 6 may be detected from capture data, for example, as described later instead of use of the obstacle sensor 7.

Not only the obstacle 6 but also other various factors may prevent from obtaining normal capture data on the entire image relating to a test pattern. Examples of the other various factors will be described later.

The computer 3 controls the entire system and performs various calculations and processing, which will be described later. The computer 3 calculates correction data on the entire image relating to a test pattern data by generating the test pattern, causing the projectors 1 to display the test pattern on the screen 5 through the image processor 2, causing the digital camera 4 to capture the displayed test pattern, setting an area to be complemented such that the resulting capture data can include a not-normally-constituting area even when the resulting capture data does not normally constitute the entire image relating to the test pattern data based on the capture data obtained from the digital camera 4 and obstacle position information from the obstacle sensor 7, and complementing the area to be complemented based on the area excluding the area to be complemented.

In the example shown in Fig. 1, the computer 3 includes, like a general personal computer (PC), a body 3a containing a CPU, a memory and a hard disk, for example, a monitor 3b connected to the body 3a for displaying an image output from the body 3a, a mouse 3c connected to the body 3a for pointing and/or selecting a position displayed within the screen of the monitor 3b and a keyboard 3d connected to the body 3a for inputting text data, for example.

Thus, correction data calculated by the computer 3 is set in the image processor 2 so that the multi-projection system can display high quality, corrected image even when the digital camera 4, obstacle sensor 7 and computer 3 are removed from the multi-projection system thereafter.

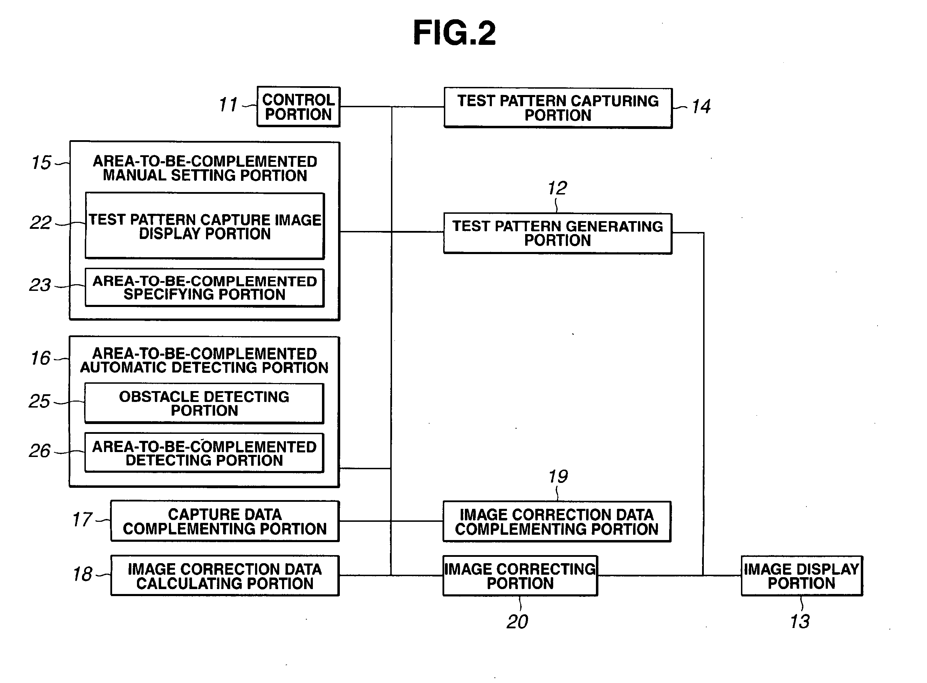

Next, Fig. 2 is a block diagram showing a functional configuration of a display characteristic correction system of the multi-projection system.

The display characteristic correction system, as shown in Fig. 2, includes a control portion 11, a test pattern generating portion 12, an image display portion 13, a test pattern capturing portion 14, an area-to-be-complemented manual setting portion 15, an area-to-be-complemented automatic detecting portion 16, a capture data complementing portion 17, an image correction data calculating portion 18, an image correction data complementing portion 19, and an image correcting portion 20. The control portion 11 controls the entire system. The test pattern generating portion 12 generates test pattern data for obtaining correction data for correcting display characteristic (image correction data). The image display portion 13 provides a display based on test pattern data generated by the test pattern generating portion 12. The test pattern capturing portion 14 captures a test pattern displayed on the image display portion 13 and outputs capture data. The area-to-be-complemented manual setting portion 15 is used for manually setting an area, which does not normally display a test pattern in the capture data, as an area to be complemented. The area-to-be-complemented automatic detecting portion 16 is used for automatically detecting an area, which does not normally display a test pattern in the capture data, as an area to be complemented. The capture data complementing portion 17 complements capture data of an area to be complemented set by the area-to-be-complemented manual setting portion 15 or the area-to-be-complemented automatic detecting portion 16 based on capture data of the area excluding the area to be complemented. The image correction data calculating portion 18 calculates image correction data based on a part or whole of the capture data. The image correction data complementing portion 19 complements image correction data when image correction data calculated by the image correction data calculating portion 18 does not relate to the entire original test data or when image correction data is calculated based on capture data including a part where a test pattern is not normally displayed. The image correcting portion 20 corrects image data to be displayed on the image display portion 13 based on correction data generated by the image correction data calculating portion 18 or the image correction data complementing portion 19.

The area-to-be-complemented manual setting portion 15 includes a test pattern capture image display portion 22 and an area-to-be-complemented specifying portion 23. The test pattern capture image display portion 22 causes capture data of a test pattern output from the test pattern capturing portion 14 to be displayed on the monitor 3b. When an operator performs an operation for specifying an area to be complemented by using the mouse 3c with reference to capture data of a test pattern displayed on the monitor 3b, the area-to-be-complemented specifying portion 23 is used for specifying an area to be complemented in accordance with the manual operation.

The area-to-be-complemented automatic detecting portion 16 includes an obstacle detecting portion 25 and an area-to-be-complemented determining portion 26. The obstacle detecting portion 25 detects an obstacle based on capture data of a test pattern output from the test pattern capturing portion 14. The area-to-be-complemented determining portion 26 determines an area to be complemented based on a detection result by the obstacle detecting portion 25.

Here, the test pattern capturing portion 14, image display portion 13 and image correcting portion 20 constitute the digital camera 4, projectors 1 and screen 5 and image processor 2, respectively.

The other components, that is, the control portion 11, test pattern generating portion 12, area-to-be-complemented manual setting portion 15, area-to-be-complemented automatic detecting portion 16, capture data complementing portion 17, image correction data calculating portion 18 and image correction data complementing portion 19 constitute the computer 3.

Among the components constituting the computer 3, the test pattern capture image display portion 22 and area-to-be-complemented specifying portion 23 especially correspond to the monitor 3b and mouse 3c (or keyboard 3d), respectively.

The obstacle detecting portion 25 constitutes the obstacle sensor 7, if any.

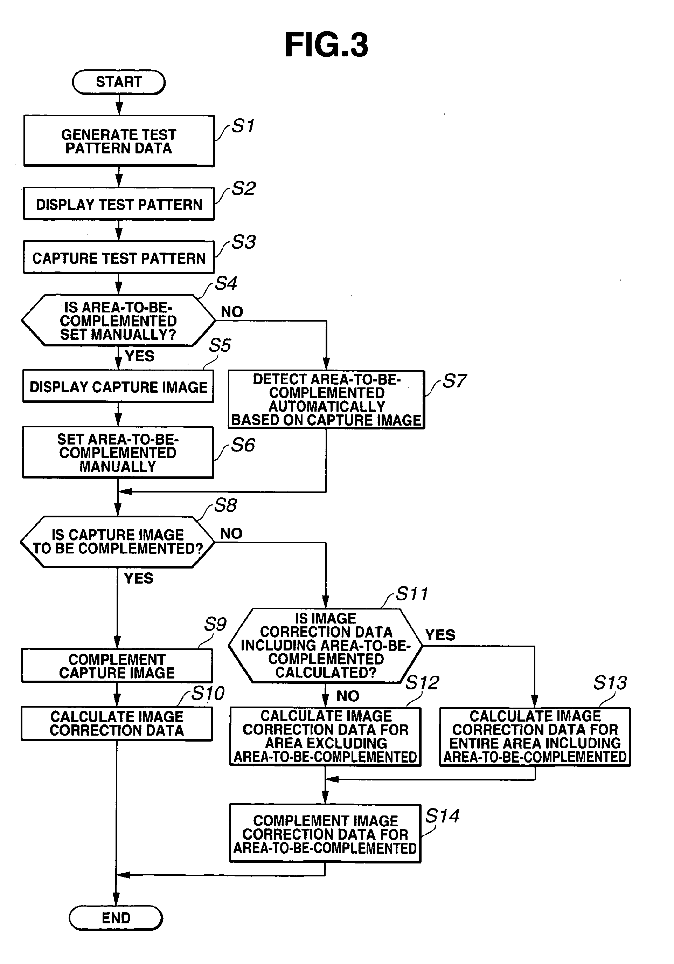

Fig. 3 is a flowchart schematically showing an operation of a display characteristic correcting system of the multi-projection system as described above.

When the configuration as above functions as a display characteristic correcting system of the multi-projection system, a program for calculating correction data for correcting display characteristic is executed on the operating system of the computer 3.

First of all, under the control of the control portion 11, test pattern data for correcting a display characteristic is generated by the test pattern generating portion 12 (step S1). The test pattern data is configured so as to define display characteristics of the image display device, such as a geometric characteristic, a color characteristic, a luminance characteristic, a white-balance characteristic and a gamma characteristic, and further to define the position and/or shape of the obstacle 6. One piece of the test pattern data may be used to calculate correction data for multiple display characteristics, but different test pattern data may be generated for each display characteristic to be corrected.

The test pattern data generated by the test pattern generating potion 12 is transmitted to the image display portion 13 and is displayed as a test pattern (step S2). More specifically, the test pattern data is converted to partial image data corresponding to each of the projectors 1 by the image processor 2, and the projectors 1 project the partial image data so that the test pattern is displayed on the screen 5.

The test pattern displayed on the screen 5 is captured by the test pattern capturing portion 14, that is, the digital camera 4 and is output as capture data (step S3).

The capture data is stored in an internal buffer memory or hard disk, for example, through an interface provided in the main body 3a of the computer 3.

In response to the receipt of the capture data, the program for calculating correction data for correcting display characteristic executed in the computer 3 determines whether an area to be complemented is to be set manually or automatically (step S4). The determination is based on whether the check mark on the operation screen displayed by the correction data for correcting display characteristic calculating program is given to the check box for automatic setting or check box for manual setting of the area to be complemented.

Here, if it is determined that the manual setting is selected, the resulting capture data is displayed on the test pattern capture image display portion 22, that is, the monitor 3b of the area-to-be-complemented manual setting portion 15 so that the capture test pattern can be checked on the monitor 3b (step S5).

Then, when an operator uses the area-to-be-complemented specifying portion 23, that is, the mouse 3c, for example, to manually specify the area to be complemented, the CPU sets the area to be complemented in accordance with the operation (step S6). The shape of the graphic figure to be used for specifying the range of the area to be complemented may have any shape such as a square, a triangle, a circle, a free polygon and a free curve but must have a shape allowing the specification of a two-dimensional area. Furthermore, multiple areas can be set since multiple obstacles 6 may exist.

If it is determined that the automatic setting is selected in step S4, the obstacle detecting portion 25 of the area-to-be-complemented automatic detecting portion 16 detects an obstacle, and the area-to-be-complemented detecting portion 26 recognizes the image area corresponding to the obstacle detected as a result as the area not normally constituting the image relating to the test pattern data and automatically sets the area to be complemented so as to include the area (step S7).

Here, the obstacle detection by the obstacle detecting portion 25 may be performed based on the detection result by the obstacle sensor 7 as shown in Fig. 1 or analysis of the capture data or both.

The analysis of capture data may be performed as follows, for example. For correction of a luminance characteristic as a display characteristic, for example, when test pattern data generated at a high luminosity has an obstacle, the part where an obstacle exists has a lower luminosity. Therefore, some threshold value may be set, and the area having a lower luminosity than the threshold value may be set as an area to be complemented. For higher accuracy, an example in which both of test pattern data at a high luminosity and test pattern data at a low luminosity are generated will be described later.

The area-to-be-complemented determining portion 26 does not always specify the area having an obstacle or the vicinity only as a target to be complemented but, being conjunct with other factors, determines an area not suitable for use as image data for correcting a display characteristic or an area set for easy computing processing as an area to be complemented.

The case having other factors may be a case that a shadow part exists due to the frame member placed on the screen 5 or a case that a space exists between screens of multiple general monitors displayed for a larger screen.

Furthermore, when projecting a test pattern on the screen 5 by the projectors 1 results in a too wide luminous flux (too large angle of projection view), the entire area of an image relating to the test pattern data may not be displayed on the screen 5 (that is, the image is larger than the display area of the screen 5). In this case, the capture data resulting from capturing of the display area of the screen 5 does not constitute the entire area of the image relating to the test pattern. Calculation of correction data for correcting display characteristic based on the capture data does not result in the correction data for correcting display characteristic relating to the entire area of the image relating to the test pattern. On the other hand, by adjusting the display characteristic including the angle of projection view later, the projection can be performed with the proper angle of view. Thus, correction data for correcting display characteristic for all of image data to be displayed is required as the correction data for correcting display characteristic. Therefore, the part not displayed on the screen 5 in the entire area of the image relating to the test pattern is set as an area to be complemented, and a correction data for correcting display characteristic of the area to be complemented must be calculated in the same manner as those for other areas to be complemented.

For easy computing processing, if an obstacle has a complicated shape, the area to be complemented may be set to have a rectangular shape so as to include the obstacle.

Therefore, the area-to-be-complemented determining portion 26 determines the above-described area as an area to be complemented as occasion demands.

Correction data for correcting display characteristic is calculated by performing complementing processing on the area to be complemented set by step S6 or S7 mainly in the following two methods. One method is the one for calculating capture data of an area to be complemented by complementing, calculating capture data relating to the entire area, and calculating the correction data for correcting display characteristic of the entire area. The other method is the one for calculating correction data for correcting display characteristic of an area excluding an area to be complemented and calculating correction data for correcting display characteristic of the area to be complemented from the correction data for correcting display characteristic of the area excluding the area to be complemented.

Therefore, whether the subject to be complemented is a capture image (that is, capture data) or not is determined (step S8). The determination is also based on whether the check mark on the operation screen displayed by the correction data for correcting display characteristic calculating program is given to the checkbox for selecting capture image or the check box for selecting the correction data for correcting display characteristic as the subject to be complemented.

Here, if the capture image is selected, the capture data of the area to be complemented is calculated by complementing from the capture data of the area excluding the area to be complemented as described above (step S9).

Then, the correction data for correcting display characteristic of the entire area is calculated based on the calculated capture data of the entire area (step S10), and the processing ends.

On the other hand, if the subject to be complemented is not a capture image in step S8, whether the correction data for correcting display characteristic is to be calculated based on all of capture data including the one for the area to be complemented or not is determined (step S11).

Here, if all of the capture data is not used, the correction data for correcting display characteristic is calculated based on the part excluding the area to be complemented within the capture data (step S12).

If all of capture data is used in step S11, the correction data for correcting display characteristic is calculated based on all of the capture data (step S13). The correction data for correcting display characteristic can be calculated not only with the area excluding the area to be complemented but also with all capture data not in consideration of the area to be complemented.

The area to be complemented for which the correction data for correcting display characteristic relating to normal capture data has not been obtained is complemented based on the correction data for correcting display characteristic obtained in step S12 or S13 to obtain the correction data for correcting display characteristic (step S14), and the processing ends.

If the automatic detection of the area to be complemented is set in step S4, actual detecting processing is performed based on capture data in step S7. However, the invention is not limited thereto. After the correction data for correcting display characteristic relating to all capture data is calculated without the setting of the area to be complemented (that is, in consideration of the obstacle 6) in step S13, the area to be complemented can be automatically detected based on the calculated correction data for correcting display characteristic.

In other words, like the example, in order to correct a luminance characteristic serving as a display characteristic, when test pattern data generated at a high luminosity has an obstacle, the part where an obstacle exists has relatively a lower luminosity. When the correction data for correcting display characteristic is generated by using the capture data, correction data for largely increasing the luminance of the part at the lower luminosity compared with the other part is generated. Therefore, the correction data is analyzed, and the data part beyond a threshold value is determined as a part having an obstacle. Then, the area to be complemented may be set so as to include the part. In this way, the area to be complemented does not necessarily have to be set based on capture data.

An area to be complemented may be arbitrarily set by an operator. Furthermore, a processing flow from the determination of an obstacle to the final calculation of correction data for correcting display characteristic can be performed automatically without requiring the setting of an area to be complemented by an operator.

As described above, the data part to be used for electronic image correction among correction data for correcting display characteristic calculated by the computer 3 is transmitted to the image processor 2, and image data to be displayed is corrected in the image processor 2.

A part, which is requiring a manual adjustment operation, of correction data for correcting display characteristic calculated by the computer 3 is displayed as an item to adjust, for example, on the monitor 3b of the computer 3 and is adjusted by an operator or a user. The manual adjustment operation may be the adjustment of the projection angle of view when the projection optical system of the projector 1 has not an electronic zoom function or adjustment in the projecting direction of each projector, for example. Apparently, the adjustment may be configured to perform electronically, but manual adjustment may be effectively performed on some parts in consideration of the costs and weight, for example, of the entire system.

Under the configuration shown in Fig. 2, test pattern data generated by the test pattern generating portion 12 can be output to the image display portion 13 directly or may be through the image correcting portion 20. In the latter case, first test pattern data is output to the image display portion 13 without any correction by the image correcting portion 20, and the correction data for correcting display characteristic calculated by the test pattern is set in the image correction portion 20. Then, second test pattern data (which may be the same as the first test pattern data, for example) is corrected by the image correcting portion 20 and is then displayed on the image display portion 13, and the correction data for correcting display characteristic is calculated again from the capture data. Thus, the accuracy can be increased. In this way, in order to increase the accuracy for correcting a display characteristic, recursive adjustment can be performed.

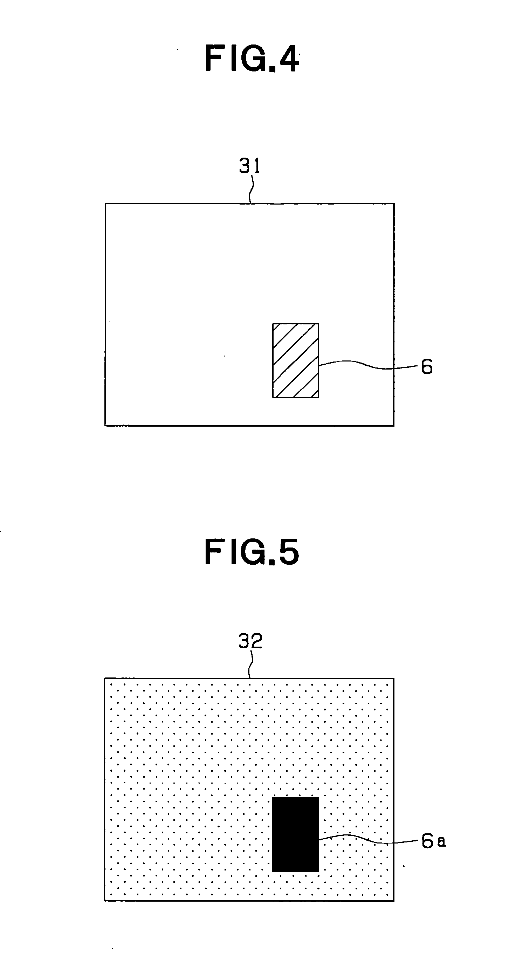

Next, Figs. 4 to 7 are diagrams illustrating an example of a unit for automatically detecting an area to be complemented, and Fig. 4 is a diagram illustrating an example having an obstacle 6 within a capture area 31.

In the case shown in Fig. 4, an area to be complemented may be detected as follows.

First of all, test pattern data corresponding to an image at a high luminosity is generated by the test pattern generating portion 12 and is displayed by the image display portion 13, and an image as shown in Fig. 5 is captured. Here, Fig. 5 is a diagram showing capture data resulting from capturing of a test pattern at a high luminosity having an obstacle. Capture data 32 includes an image part 6a relating to the obstacle 6.

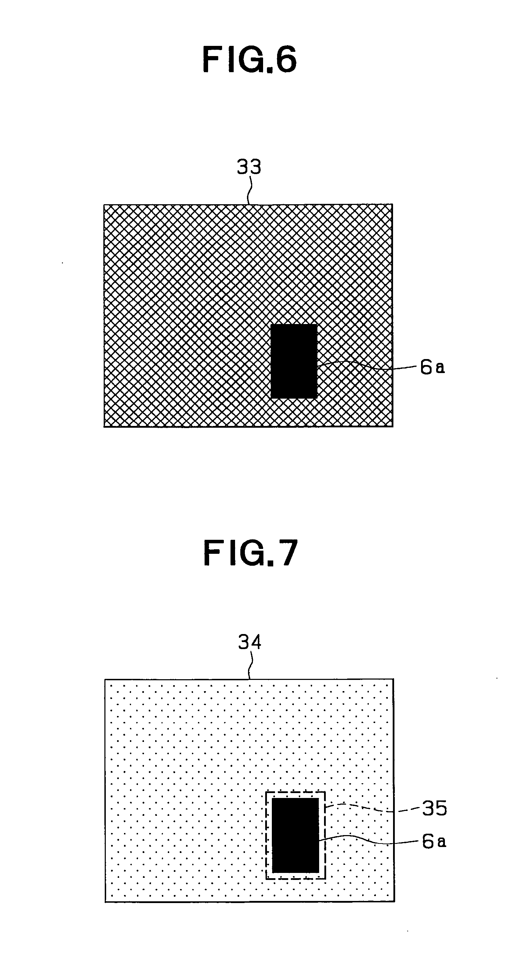

Next, test pattern data corresponding to an image at a low luminosity is generated by the test pattern generating portion 12 and is displayed by the image display portion 13, and an image as shown in Fig. 6 is captured. Here, Fig. 6 is a diagram showing capture data resulting from capturing of a test pattern at a low luminosity with an obstacle existing. Capture data 33 also includes the image part 6a relating to the obstacle 6.

When the capture data 32 and capture data 33 are compared, it can be expected that the part relating to the test pattern has a large difference in luminance while the image part 6a relating to the obstacle 6 has a small difference in luminance.

Therefore, as shown in Fig. 7, an area to be complemented 35 is set in the capture data 34 with a small margin so as to include the image part 6a relating to the obstacle 6. Here, Fig. 7 is a diagram showing how an area to be complemented is set in capture data with a margin. The margin is set for eliminating the possibility that the image part 6a relating to the obstacle 6 may have an influence on the other image part and/or that a blur may occur since the obstacle 6 does not exist in the depth of the field of subject of the digital camera 4 that captures the screen 5. The margin may be set to any width.

While the area to be complemented 35 here may be set along the outline of the image part 6a of the obstacle 6, the area to be complemented 35 may be set in any shape (such as a rectangular shape) including the image part 6a of the obstacle 6 in consideration of simplicity of processing.

Notably, the image part 6a of the obstacle 6 is automatically detected for improved accuracy by displaying two test patterns at high and low luminosities and comparing the test patterns (to obtain a difference between both capture data, for example) here. However, when a difference in luminance from that of the obstacle 6 is known, the automatic detection can be performed with one test pattern, which can reduce the processing time. More specifically, as described above, a test pattern at a high luminosity may be displayed, and the part having a luminance equal to or lower than a predetermined luminance in capture data can be estimated as to be the obstacle 6.

Furthermore, the invention is not limited to the differentiation of luminance of displayed test patterns, but the obstacle 6 can be detected by differentiating color of displayed test patterns or by displaying a test pattern in a specific texture. In addition, since the obstacle 6 is positioned on a closer side to the digital camera 4 than the screen 5, the obstacle 6 may be automatically detected by performing distance detection applying AF technology or the obstacle 6 may be automatically detected by using a so-called image recognition technology. Especially, when the shape of an obstacle in a capture image is roughly known in advance, one technology suitable for detecting the shape of the obstacle may be selected from generally known image shape technologies such as pattern matching, and the selected one may be used for detecting the area that the obstacle occupies. Apparently, obstacle detection with higher accuracy may be performed by using a combination of those technologies.

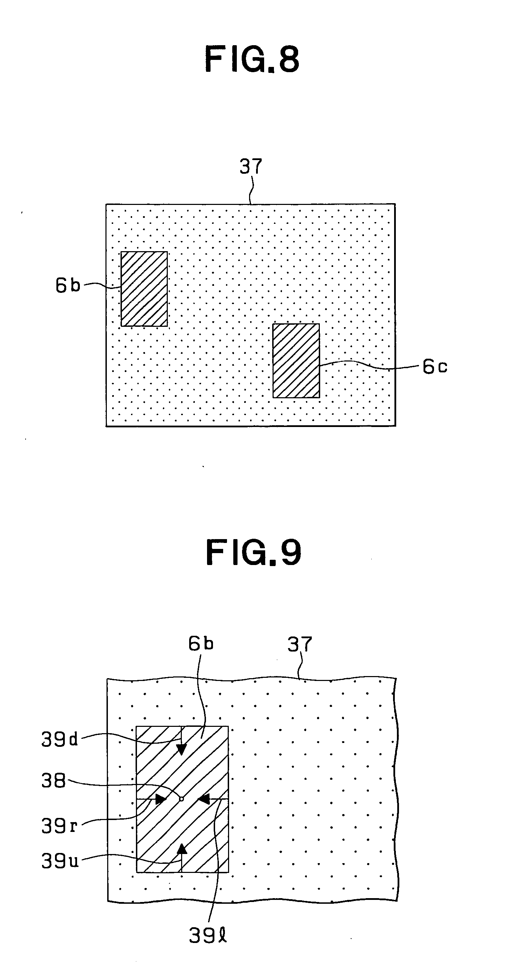

Next, an example of a capture data complementing method will be described with reference to Figs. 8 and 9. Fig. 8 is a diagram showing an example of a status of an area to be complemented in capture data, and Fig. 9 is a diagram showing how capture data of the area to be complemented is complemented by using capture data of the area excluding the area to be complemented. The processing for complementing capture data is performed in step S9 shown in Fig. 3.

For example, as shown in Fig. 8, in the capture data 37, an image part relating to the obstacle 6 is detected, and areas to be complemented 6b and 6c are set.

Here, complementing processing may be performed on the area to be complemented 6b as shown in Fig. 9, for example. Fig. 9 shows an enlarged status of the part of the area to be complemented 6b in Fig. 8.

Here, the capture data at each focus point in the area to be complemented 6b is weighted and complemented based on capture data in the vicinity outside of the area to be complemented 6b and in consideration of a distance between the focus point and the vicinity.

For example, when the center point 38 within the area to be complemented 6b is the focus point, the amount of contribution (shown by the downward arrow 39d) from the upper vicinity of the focus point 38 is equivalent to an amount of contribution (shown by the upward arrow 39u) from the lower vicinity of the focus point 38. Also, the amount of contribution (shown by the rightward arrow 39r) from the left vicinity of the focus point 38 is equivalent to the amount of contribution (shown by the leftward arrow 391) from the right vicinity of the focus point 38.

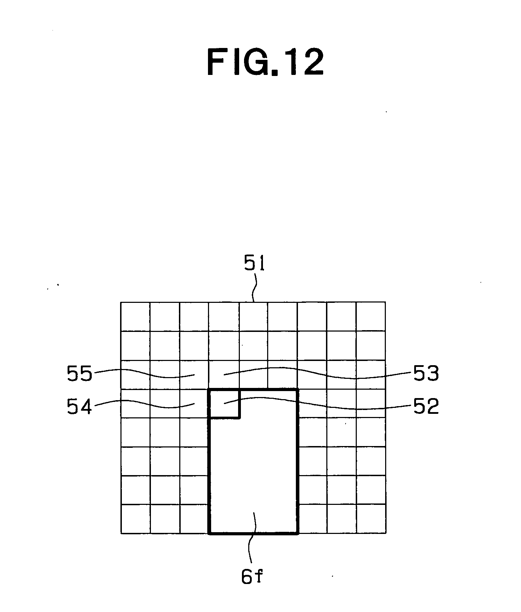

Furthermore, a focus point near one of the vicinities is weighted heavily while a focus point far from one of the vicinities is weighted lightly. The specific example of the weighting will be described later with reference to Fig. 12.

In this way, the entire area to be complemented 6b is complemented by sequentially generating complementary data of all points within the area to be complemented 6b serving as focus points.

Then, the area to be complemented 6c is complemented like the area to be complemented 6b.

The complementing processing here is performed by estimating a correlation of capture data based on distances between a focus point and into vicinities. However, with test pattern data in which a specific pattern is repeated, the complementing processing may be performed by estimating a correlation by taking the fact into consideration.

The capture data complementing processing may be performed in units of pixels included in an image, but the processing does not necessarily have to be performed with detailed accuracy such as in units of pixels since the complementing processing to be performed here is processing for calculating correction data for correcting display characteristic. Accordingly, complementing processing may be performed in units of block which includes multiple pixels, for example. In this case, the processing time can be reduced largely.

Furthermore, while the case that capture data is complemented is described above, the same complementing method can be applied for complementing correction data for correcting display characteristic.

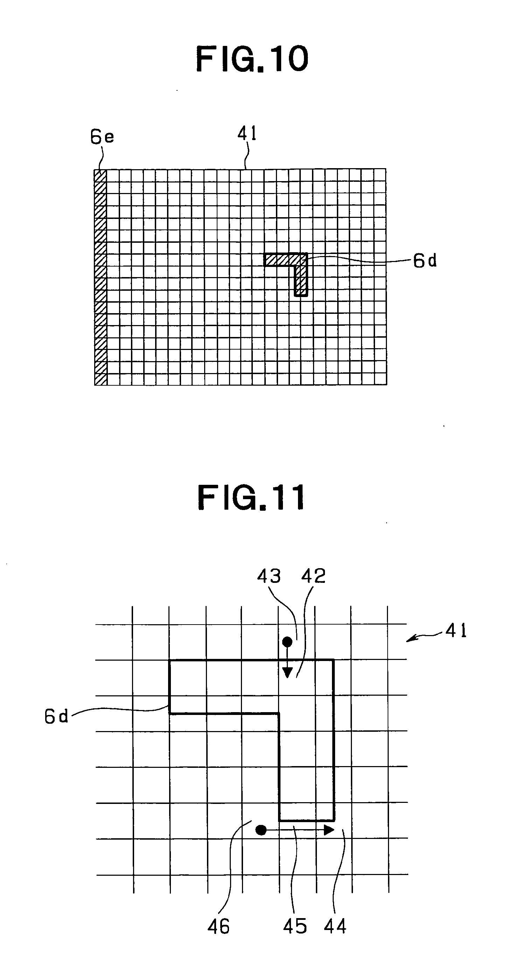

Next, an example of a correction data for correcting display characteristic complementing method will be described with reference to Figs. 10 and 11. Fig. 10 is a diagram showing an example of a status of an area to be complemented in the correction data for correcting display characteristic. Fig. 11 is a diagram showing how correction data for correcting display characteristic of the area to be complemented is complemented by using correction data for correcting display characteristic of the area excluding the area to be complemented. The correction data for correcting display characteristic complementing processing is performed in step S14 shown in Fig. 3.

Calculating correction data for correcting display characteristic based on capture data of the other area than an area to be complemented results in correction data for correcting display characteristic for the area excluding the area to be complemented. This is as shown in Fig. 10 here, for example.

In the example shown in Fig. 10, correction data for correcting display characteristic is calculated in units of block which includes a predetermined number of pixels included in an image. A long and narrow area to be complemented 6e exists at the left end of the correction-data-for-correcting-display-characteristic 41. An L-shaped area to be complemented 6d exists in the middle part but on the slightly right side of the correction-data-for-correcting-display-characteristic 41. Notably; actual correction data for correcting display characteristic is a set of correction data for correcting display characteristic corresponding to the positions (that is, block positions or pixel positions where one pixel is one block), and it does not mean that two dimensional image data are displayed. However, Figs. 10 and 11 show visual illustrations of image data at the identical positions.

Correction data for correcting display characteristic relating to the areas to be complemented 6d and 6e are complemented based on the correction data for correcting display characteristic before complementation. The processing for complementing the correction data for correcting display characteristic of the area to be complemented 6d thereof will be described here with reference to Fig. 11.

In the correction data for correcting display characteristic complementing processing, a block including at least a part of the area to be complemented 6d is complemented by, for example, copying correction data for correcting display characteristic of a block close to the focus block.

More specifically, the correction data for correcting display characteristic of a block 42 completely included in the area to be complemented 6d is complemented by copying the correction data for correcting display characteristic of a block 43 closest to the block 42 on the area excluding the area to be complemented 6d.

Furthermore, the correction data for correcting display characteristic of the block 45 partially included in the area to be complemented 6d is complemented by copying the correction data for correcting display characteristic of the block 46 closest to the block 45 on the area excluding the area to be complemented 6d.

The correction data for correcting display characteristic of the block 44 partially included in the area to be complemented 6d may be complemented by using the correction data for correcting display characteristic of the block adjacent to the block 44 on the right, because which is the closest in the area excluding the area to be complemented 6d. However, for simple processing, the correction data for correcting display characteristic of the block 46 may be copied to the block 45 and, at the same time, to the block 44.

The optimum processing here (that is, processing with shorter processing time and with high accuracy) may be selected in accordance with the type of a display characteristic to be corrected or in accordance with the size and/or shape of an area to be complemented.

When complementing processing is performed by copying, for example, by copying each block from the top to the bottom of an image, the same data aligns vertically, resulting in a vertical stripe pattern. Therefore, in this case, filtering processing may be performed so as to blur complemented data (complemented capture data or complemented correction data for correcting display characteristic).

While the correction data for correcting display characteristic of the area excluding the area to be complemented 6d, which is close to the area to be complemented 6d, is copied to complement the correction data for correcting display characteristic of the area to be complemented 6d, the invention is not limited thereto. The complementing processing may be of course performed by weighting correction data for correcting display characteristic of multiple blocks in accordance with a correlation with respect to a distance and a pattern between a block to be complemented and a complementing block.

The processing of complementing correction data for correcting display characteristic by copying as described above is processing suitable when the display characteristic is a color characteristic, for example.

Next, Fig. 12 is a diagram for explaining a complementing method with weighting. The complementing method with weighting as shown in Fig. 12 may be applied to the processing of complementing capture data or may be applied to processing of complementing correction data for correcting display characteristic.

An example will be described in which when data (capture data or correction data for correcting display characteristic) within an area to be complemented is complemented based on data of the area excluding the area to be complemented, it is done more naturally by taking into consideration of a correlation instead of copying only. In the example shown in Fig. 12, data of a focus block (or focus pixel) is calculated by weighting with a correlation of distance to data of a block (or pixel) in vicinities.

In data 51, an area surrounded by the shown thick line is an area to be complemented 6f. A case will be described in which a block 52 at the upper left corner, for example, of the area to be complemented 6f is to be complemented.

Blocks close to the block 52 in the area excluding the area to be complemented 6f are a block 53 adjacent to the block 52 at the top, block 54 adjacent at the left and block 55 adjacent at the left. Therefore, data of the block 52 is complemented based on data of the blocks 53, 54 and 55. However, in consideration of the distances, the data of the blocks 53 and 54 are considered at a ratio of 2 while the data of the block 55 is considered at a ratio of 1. That is, the data of the block 52 is calculated as (2X+2Y+Z)/5 where the data of the blocks 53, 54 and 55 are X, Y and Z.

The data of the block 52 is calculated by obtaining a weighted average, but a proper calculation method may be of course used if an increase/decrease of the data is not a linear function.

The calculation may be performed on all blocks within the area to be complemented 6f so that all of data relating to the area to be complemented 6f can be obtained.

The calculation method described here may be applied to both cases that the data is capture data and that the data is correction data for correcting display characteristic.

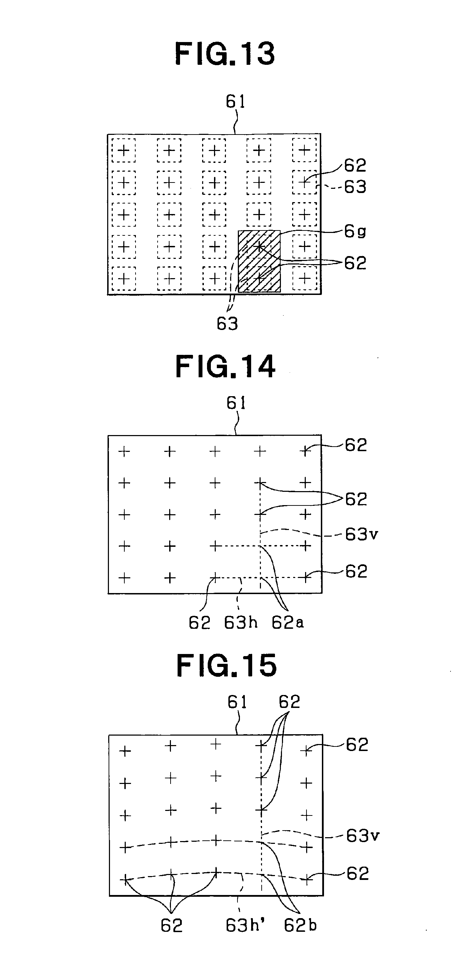

Next, an example in which a geometric characteristic serving as a display characteristic is corrected will be described with reference to Figs. 13 to 15. Fig. 13 is a diagram showing a status in which capture data of a test pattern for correction of a geometric characteristic includes an obstacle. Fig. 14 is a diagram showing how a marker in a test pattern is complemented. Fig. 15 is a diagram showing how a marker in a test pattern having a geometric distortion is complemented.

In order to correct a geometric characteristic, the test pattern generating portion 12 generates test pattern data having cross-shaped markers arranged at some intervals two-dimensionally.

When the test pattern displayed by the image display portion 13 has an obstacle 6, a part of the markers may not be captured by the test pattern capturing portion 14.

In other words, in the capture data 61, the shaded part is an area to be complemented 6g including the part having the obstacle 6. In this case, the marker 62, which should be originally included in the area to be complemented 6g, is omitted.

The capture data complementing portion 17 calculates coordinate information of the omitted marker 62 (more specifically, coordinate information of the point of the intersection of the cross shape of the marker) based on the other part than the area to be complemented 6g of the capture data 61.

First of all, detection of coordinates of the marker 62 included in the areas other than the area to be complemented 6g of the capture data 61 is performed as follows.

Based on test pattern data generated by the test pattern generating portion 12, automatic detection of the marker 62 within a marker detection area 63 is performed by setting for each marker 62 the marker detection area 63 which may include the marker 62. The setting of the marker detection area 63 is for reducing processing time with respect to the case that the entire area is to be detected. Thus, the coordinates of the markers 62 in the area excluding the area to be complemented 6g are detected.

When the markers 62 are arranged in a two-dimensional grid pattern, each marker can be specified by using a row index and a column index. One omission in these indexes is the index of the omitted marker 62 in the area to be complemented 6g. For example, in the example shown in Fig. 13, when two markers 62 are omitted, one is referred by index of (4,4) and the other is referred by index of (5,4) where index is expressed by (row, column).

In order to complement, an omitted marker 62 (one of multiple markers if any) is defined by a row index and column index as described above. Then, markers 62 having the same row index as that of the focused omitted marker 62 are selected as a first marker group, and markers 62 having the same column index as that of the focused omitted marker 62 are selected as a second marker group.

Then, as shown in Fig. 14, a horizontal straight line 63h is estimated based on the coordinates of the markers 62 included in the first marker group, and a vertical straight line 63v is also estimated based on the coordinates of the markers 62 included in the second marker group.

The coordinates 62a of the intersection of these two straight lines 63h and 63v are estimated values of the coordinates of the focused omitted marker 62.

When a bow-shaped geometric distortion occurs therein as shown in Fig. 15, for example, the estimation cannot be achieved with straight lines. In this case, a horizontal curve 63h' is estimated by spline interpolation, for example, based on the coordinates of the markers 62 included in the first marker group.

Then, the coordinates 62b of the intersection of the vertical straight line 63v, which is estimated based on the coordinates of the markers 62 included in the second marker group, and the curve 63h can be estimated as the coordinates of the focused omitted marker 62.

When not only horizontal but also vertical distortions occur therein, spline interpolation is also performed on the second marker group.

The algorithm for estimating the curve here is spline interpolation, for example, but the invention is not limited thereto. Various algorithms such as Lagrangian interpolation may be adopted.

An optimum algorithm used for the interpolation may be adopted in accordance with a characteristic of the screen (such as having a concave surface or convex surface) of the image display portion 13 or a capture characteristic of the test pattern capturing portion 14 (such as an aberration of curvature of the capturing optical system).

The interpolation fixes the positions of the markers 62 in the entire image. Then, the geometric correction data is calculated such that the markers 62 are displayed at the original positions. The calculation of the geometric correction data may apply, for example, the technology as disclosed in Japanese Unexamined Patent Application Publication No. 9-326981.

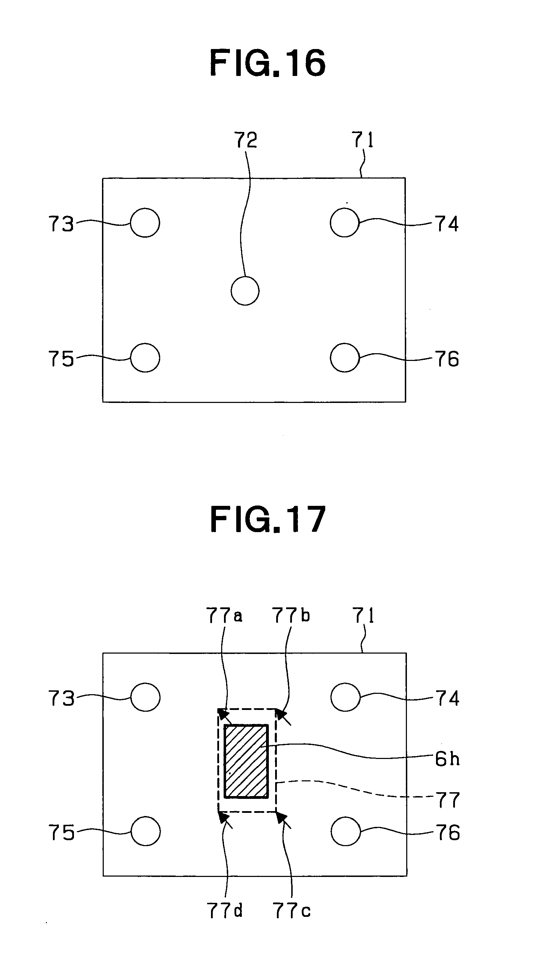

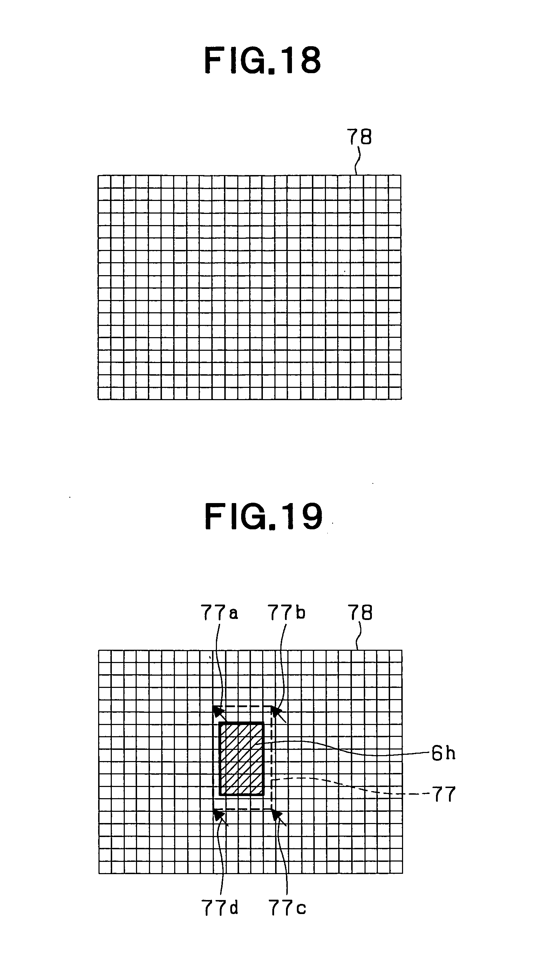

Next, an example in which a color characteristic serving as a display characteristic is corrected will be described with reference to Figs. 16 to 19. Fig. 16 is a diagram showing capture data of a test pattern for correcting the color characteristic. Fig. 17 is a diagram showing a status in which the capture data of the test pattern for correction of the color characteristic includes an obstacle. Fig. 18 is a diagram showing how the capture data of the test pattern is divided into small blocks. Fig. 19 is a diagram showing a status in which the capture data divided into small blocks includes an obstacle.

In color correction, color information measuring areas 72 to 76 set in capture data 71 as shown in Fig. 16 are used. The color information measuring areas 72 to 76 are different from those for geometric correction or luminance correction. When one of the color information measuring areas 72 to 76 is blocked by an obstacle even partially, that is, when even a part of the color information measuring areas 72 to 76 on the capture data 71 is omitted as shown in Fig. 17, the color correction may be influenced thereby.

Furthermore, an obstacle part may have an influence on the color information measuring areas 72 to 76 even when the obstacle does not completely overlap with the color information measuring areas 72 to 76 on the capture data 71 since the capture data 71 may be influenced by a flare of the optical system of the capturing device. As a result, color correction data cannot be obtained accurately.

In order to reduce the influence on color correction, following complementing is performed. However, even when an obstacle exists on the capture data, if it does not have an influence on the color information measuring areas, the complementing processing can be omitted.

Here, an example in which capture data is to be complemented will be described as in step S9 of Fig. 3.

When the capture data has the status shown in Fig. 17, that is, when the color information measuring area 72 positioned at the center among the color information measuring areas 72 to 76 is blocked by an obstacle 6, which results in an obstacle image 6h, an area to be complemented 77 is set with a margin so as to include the obstacle image 6h. When the setting of the area to be complemented 77 is performed manually in step S6, the pointer on the screen is moved through the mouse 3c, for example, and the area is set by clicking four points 77a, 77b, 77c and 77d, for example, as shown in the figure.

While four points are input to set a rectangular area, a triangular or polygonal area may be set by increasing or decreasing the number of points.

The width of the margin here may be set so as to include up to an area possibly subjected to a flare as described above, for example.

Furthermore, while the area to be complemented is set manually here, the automatic setting is also possible as described above.

The capture data of the area to be complemented 77 set in this way may be complemented in the method described with reference to Fig. 12, for example.

While the color information measuring area is circular as above, the invention is not limited thereto. The color information measuring area may be rectangular or may have other shapes. The size of one color information measuring area can be also changed. Furthermore, while five color information measuring areas are available in the example shown in Fig. 16, the number of color information measuring areas may be reduced or increased. In other words, the number of color information measuring areas can be set to any number from one to the number that can cover the entire area.

Here, Fig. 18 shows an example in which the entire area 78 is covered by increasing the number of color information measuring areas indicated by squares (to maximum, for example). Also in this case, when the obstacle image 6h exists, an area to be complemented 77 may be set as shown in Fig. 19, and the complementing processing may be performed thereon in the same manner.

Furthermore, in order to correct a luminance characteristic serving as a display characteristic, a test pattern for correcting a geometric characteristic as described above or a test pattern for correcting a color characteristic may be also served, or a test pattern including white color only (or a test pattern including grids for determining coordinates points thereon and the like) may be used.

In the processing of correcting a luminance characteristic in this way, an area to be complemented may be set manually or automatically as described above, and the set area to be complemented may be complemented by copying or in consideration of a correlation so as to achieve a uniform luminance. However, a luminance characteristic is desirably complemented in consideration of a correlation since the correction for a natural luminance distribution is important.

When data handles the amount of correction of a luminance with a +/- correction coefficient of y value and the correlation as a distance as described above, the equation (2X+2Y+Z)/5 as described above can be used in order to complement the block 52 in Fig. 12.

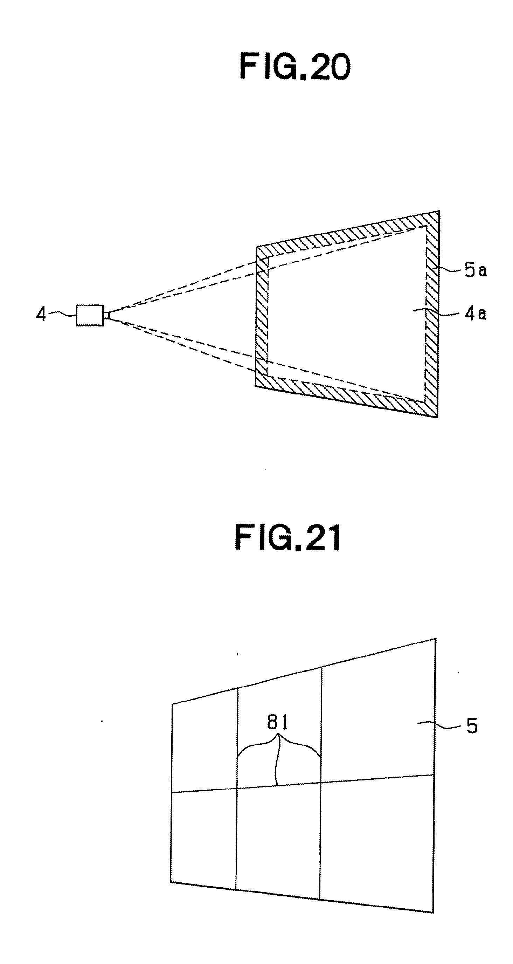

Fig. 20 is a diagram showing a status in which a capturing or capture area by a capturing device is narrower than a display area on an image display device.

As described above, there are cases that the entire area of an image displayed on the display area 5a of the image display device cannot be captured in addition to the case that a tangible obstacle exists between the capturing device 4 and the display area 5a of the image display device. As shown in Fig. 20, the capturing device 4 may be placed at a fixed position (when the capturing device 4 cannot be separated enough from the image display device inside of a house, for example), and the entire display area 5a of the image display device cannot be captured within the capturing range 4a.

Alternatively, on the other hand, when the image display device is a projector as described above, the projected luminous flux may spread beyond the screen, and the test pattern cannot be entirely displayed on the screen.

Furthermore, Fig. 21 is a diagram showing a status in which a structural frame exists within the display screen of the image display device.

In the example as shown in Fig. 21, the part of a frame 81 placed on the screen 5 does not display a test pattern, and the test pattern displayed near the frame 81 may be influenced by a shade of the frame 81, for example. The cases corresponding to Fig. 21 may include a case that a skeletal structure with a frame member is provided for maintaining the flatness of the screen 5 and a case that a large screen is provided for multiple monitors, for example.

Even in the cases as shown in Figs. 20 and 21, the correction data for correcting display characteristic for the entire area of the image relating to test pattern data can be calculated by setting the part not captured by a capturing device (or the part with a margin) as the area to be complemented and performing the complementing processing thereon in the same manner.

The case that the obtained capture data does not normally constitute the entire image relating to test pattern data is not limited thereto but may further be a peripheral part of an image relating to capture data, which may be distorted or blurred under an influence of a curved shape of the display area of the image display device or an aberration of the capturing optical system of the capturing device and a reflection part caused by external light (such as interior illumination light, sun light, natural light from the sky and reflected light from waves) in the display area of the image display device.

Also in these cases, the same complementing processing can be performed by setting an area to be complemented so as to include the part which may not be normal.

Especially, in order to perform complementing processing on the peripheral part due to an aberration, data may be copied radially from the center of the image from which normal capture data can be obtained to the periphery of the screen from which normal capture data is not obtained.

The case that the display area of the image display device has a curved shape may specifically include a case with a concave screen or a case that the display area of the image display device having a CRT has a convex shape, such as an arch-shaped screen disposed along a cylindrical wall surface and a semispherical doom-shaped screen for use in a planetarium or the like.

While either manual or automatic setting of the area to be complemented is selected in the description above, the invention is not limited thereto. For example, the automatic setting may be performed first, and then the setting may be changed arbitrarily manually. Thus, the area setting with a human sense of sight can be implemented with higher accuracy, and the operator's load can be reduced at the same time.

The setting of the obstacle 6 needs to be performed only once as far as the setting is changed, but the obstacle 6 can be set for each case of display characteristic type to be corrected (that is, a case that a luminance characteristic is to be corrected, a case that a geometric characteristic is to be corrected, a case that a color characteristic is to be corrected and so on) as required.

While the projector 1 and the screen 5 serving as a projection type image display device are used as the image display portion as described in the above, the invention is not limited thereto. For example, the invention can be similarly applied to an image display portion having a plasma display or a liquid crystal display.

Furthermore, the system for correcting a display characteristic as described above is not only applied to a projection system but also an image display device such as a CRT monitor and a liquid crystal monitor and a multi-type image display device including a combination thereof.

According to this embodiment, correction data for correcting display characteristic relating to the entire image can be calculated even when capture data resulting from capturing of a test pattern does not normally constitute the entire image relating to the test pattern data.

Therefore, correction data for correcting display characteristic relating to the entire image can be calculated and high quality image can be displayed without the removal of factors such as the presence of an obstacle between a capturing device and an image display device, the presence of the display area of an image display device which is lying off the capturing range of a capturing device and the presence of a structure such as a frame within the display area of an image display device.

Furthermore, the processing time can be reduced when correction data for correcting display characteristic is calculated with an area excluding an area to be complemented since the data to be processed is reduced.

On the other hand, when the calculation of correction data for correcting display characteristic is performed on all capture data without consideration of an area to be complemented and then the complementing processing is performed by invalidating the correction data for correcting display characteristic of the area to be complemented, accurate correction data for correcting display characteristic can be calculated only by adding a complementing portion as an add-on type processing module or a processor. This is because the processing up to the calculation of the correction data for correcting display characteristic can be performed directly by using conventional software or device, for example. Thus, developed software or device can be effectively used, and the development costs can be reduced.

The invention is not limited to the embodiments but may be apparently changed and applied variously without departing from the scope and spirit of the invention.

### Industrial Applicability

According to a method of calculating correction data for correcting display characteristic, program for calculating correction data for correcting display characteristic and apparatus for calculating correction data for correcting display characteristic of the invention, correction data for correcting display characteristic relating to an entire image can be calculated, and the high quality image can be displayed even when capture data resulting from capturing of a test pattern thereof does not normally constitute the entire image relating to the test pattern data.

## Claims

1. A method of calculating correction data for correcting display characteristic, comprising the steps of:
displaying a test pattern on an image display device based on test pattern data;
obtaining capture data by capturing the test pattern; and
calculating correction data for correcting a display characteristic of the image display device based on the obtained capture data,
wherein, when the obtained capture data does not normally constitute an entire image relating to the test pattern data, correction data relating to an entire image relating to the test pattern data including correction data of an area to be complemented is calculated by setting the area to be complemented so as to include the not-normally-constituting area and complementing the area to be complemented based on the area excluding the area to be complemented.

2. The method of calculating correction data for correcting display characteristic according to Claim 1, wherein the test pattern data is generated before the test pattern is displayed on the image display device.

3. The method of calculating correction data for correcting display characteristic according to Claim 1 or 2, wherein the display characteristic includes at least one of a geometric characteristic, a color characteristic, a luminance characteristic, a white balance characteristic and a gamma characteristic.

4. The method of calculating correction data for correcting display characteristic according to any one of Claims 1 to 3,
wherein the calculation of correction data of the area to be complemented is performed by:
obtaining capture data relating to the entire image relating to the test pattern data by complementing capture data of the area to be complemented based on capture data of the area excluding the area to be complemented; and
calculating correction data relating to the entire image relating to the test pattern data based on the obtained capture data.

5. The method of calculating correction data for correcting display characteristic according to any one of Claims 1 to 3,
wherein the calculation of correction data of the area to be complemented is performed by:
calculating correction data of the area excluding the area to be complemented based on the capture data of the area excluding the area to be complemented; and
complementing correction data of the area to be complemented based on the calculated correction data of the area excluding the area to be complemented.

6. The method of calculating correction data for correcting display characteristic according to any one of Claims 1 to 3,
wherein the calculation of correction data of the area to be complemented is performed by:
calculating correction data of the entire area of the image relating to the capture data based on the capture data; and
complementing correction data of the area to be complemented based on the correction data of the area excluding the area to be complemented in the calculated correction data.

7. The method of calculating correction data for correcting display characteristic according to any one of Claims 1 to 6,
wherein an image relating to the capture data is displayed before the area to be complemented is set; and
the area to be complemented is set in accordance with a manual operation for the displayed image.

8. The method of calculating correction data for correcting display characteristic according to any one of Claims 1 to 6, wherein, based on a result of recognition of an area that does not normally constitute the image relating to the test pattern data, the recognition being made by analyzing the capture data, the area to be complemented is automatically set so as to include the recognized area.

9. The method of calculating correction data for correcting display characteristic according to Claim 8, wherein the analysis of capture data is performed by comparing multiple capture data corresponding to multiple test pattern data.

10. The method of calculating correction data for correcting display characteristic according to Claim 6, wherein, the area to be complemented is automatically set so as to constitute the recognized area based on a result of recognition of an area that does not normally constitute the image relating to the test pattern data, the recognition being made by analyzing correction data of the entire area of the image relating to the capture data.

11. The method of calculating correction data for correcting display characteristic according to Claim 10, wherein the analysis of capture data is performed by comparing correction data of the entire area of the images relating to multiple capture data corresponding to multiple test pattern data.

12. The method of calculating correction data for correcting display characteristic according to any one of Claims 1 to 6, wherein an obstacle is detected by using an obstacle detecting device before the area to be complemented is set; and
the area to be complemented is automatically set so as to constitute the area based on a result of recognition of an image area corresponding to the detected obstacle as an area that does not normally constitute the image relating to the test pattern data.

13. The method of calculating correction data for correcting display characteristic according to Claim 1, wherein data of the area to be complemented is complemented by copying data of the area excluding the area to be complemented thereto.

14. The method of calculating correction data for correcting display characteristic according to Claim 1, wherein the complementing of the data of the area to be complemented is calculated from the data of the area excluding the area to be complemented based on a predetermined correlation.

15. The method of calculating correction data for correcting display characteristic according to Claim 14, wherein the predetermined correlation is a distance between the position of a part to be complemented in the area to be complemented and the position at which complementing data exists in the area excluding the area to be complemented.

16. The method of calculating correction data for correcting display characteristic according to Claim 1, wherein the image display device is a projection device including a projector for projecting an image and a screen for displaying the image projected by the projector.

17. The method of calculating correction data for correcting display characteristic according to Claim 1, wherein the image display device is a multi-projection device having multiple projectors each for projecting a partial image and a screen for displaying images projected by the multiple projectors and constructing one image as a whole by arranging partial images projected by the projectors on the screen in such a manner that the images are superimposed one over another at the edges of adjacent partial images.

18. A program for calculating correction data for correcting display characteristic, causing a computer to:
display, based on test pattern data, a test pattern on an image display device;
obtain capture data by capturing the test pattern; and
calculate, based on the obtained capture data, correction data for correcting a display characteristic of the image display device,
wherein, when the obtained capture data does not normally constitute an entire image relating to the test pattern data, correction data relating to an entire image relating to the test pattern data including correction data of an area to be complemented is calculated by setting the area to be complemented so as to include the not-normally-constituting area and complementing the area to be complemented based on the area excluding the area to be complemented.

19. An apparatus for calculating correction data for correcting display characteristic, the apparatus comprising:
a capturing device for capturing a test pattern displayed on an image display device based on test pattern data and obtaining capture data; and
a calculating device for calculating, based on the obtained capture data, correction data for correcting a display characteristic of the image display device,
wherein, when the obtained capture data does not normally constitute an entire image relating to the test pattern data, correction data relating to an entire image relating to the test pattern data including correction data of an area to be complemented is calculated by setting the area to be complemented so as to include the not-normally-constituting area and complementing the area to be complemented based on the area excluding the area to be complemented.
